# EUROPÄISCHE PATENTSCHRIFT

(11) **EP 1 908 965 B1**
(45) Veröffentlichungstag und Bekanntmachung des Hinweises auf die Patenterteilung: **22.12.2010**
(21) Anmeldenummer: 07116353.9
(22) Anmeldetag: 13.09.2007
(51) Int. Cl.: F16B 13/00, F16B 13/06

(54) **Einweg-Schraubkombination**
Oneway screw combination
Combinaison de vis à sens unique

(30) Priorität: 02.10.2006 DE 20615103 U
(43) Veröffentlichungstag der Anmeldung: 09.04.2008
(73) Patentinhaber: Chun-l Hardware Co., Ltd., Gangshan Township Kaohsiung County (TW)
(72) Erfinder: Cheng, Ming-Chia, Kaohsiung County (TW)
(74) Vertreter: Chaillot, Geneviève

(56) Entgegenhaltungen:
- DE-A1- 3 318 800
- DE-U1- 7 932 608
- DE-U1-202004 015 509

## Beschreibung

Eine Art Einweg-Schraubkombination, bestehend aus einem Dübel, einer Schraube und einer Bohrspitze. Der Dübel ist innen hohl und kann das Schraubgewinde aufnehmen. Am oberen Ende der Schraube ist die Bohrspitze festgeschraubt, am unteren Ende befindet sich die Aufsatzfläche für Drehwerkzeuge. Im mittleren Bereich befinden sich Schraubzähne, die in den oberen Bereich des Dübels greifen. An der Außenseite des Dübels befinden sich ein Gewinde und ein verformbarer Körper. Die Besonderheiten sind, dass im inneren Durchmesser an der Spitze des Dübels eine Grifffläche angebracht ist, mittels welcher das Schraubgewinde der Schraube, auch wenn sich die Öffnung an der Spitze des Dübels bei feuchter Umgebung ausweitet, weiterhin einen Schraubkontakt beibehält, sowie weiterhin die zweite Besonderheit, dass zwischen dem vorstehenden Begrenzungsring und der Schraube ein Sperrelement eingelassen ist, welches verhindert, dass der Dübel sich lockert oder löst.

Die in der vorliegenden Erfindung vorgestellte Einweg-Schraubkombination bietet umfassende Anwendungsmöglichkeiten, etwa bei der Montage von Gipsplatten, Metallplatten, Holzplatten, Kunststoffplatten und Wänden. Hauptsächlich handelt es sich um eine technologische Verbesserung, durch die der Plastikdübel, auch wenn er sich in feuchter Umgebung ausdehnt, weiterhin dem Schraubgewinde eine feste Verankerung bietet sowie durch die verhindert wird, dass der Dübel sich während des Schraubvorgangs lockert oder löst.

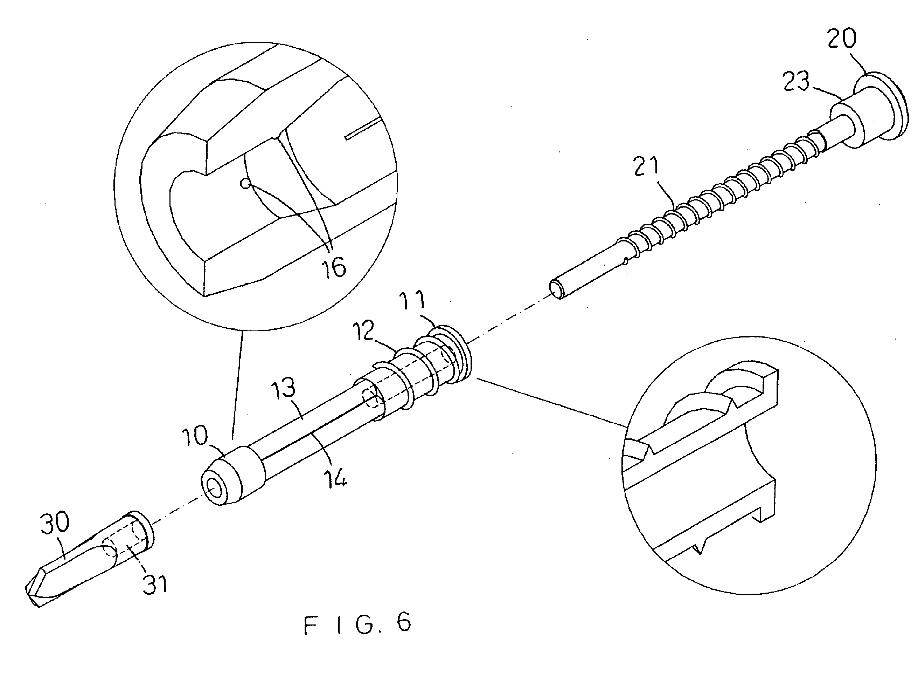

### 1. Die für die vorliegende Erfindung maßgebliche Beschreibung bezieht sich insbesondere auf Abbildung 6.

Zunächst wird auf die bekannten Lösungen Bezug genommen. Dabei werden in den Zeichnungen folgende Bezugszeichen für die einzelnen Bauteile verwendet: bezieht sich insbesondere auf Abbildung.

Man kann Beispiele von bekannten Lösungen zur Befestigung eines Werkstücks an einem Wandelement in DE 20 2004 015509 U1, DE 79 32 608 U1, und DE 33 18 800 A1 finden.

DE 20 2004 015509 U1 beschreibt eine Dübelschraube, bestehend aus einem hohlen Körper, einer Spreizschraube und einem Bohrkopf. Die Spreizschraube hat einen konischen Kopf, und kann unmittelbar in einen konischen Loch des hohlen Körpers eingeschlagen werden.

DE 79 32 608 U1 beschreibt einen mehrteiligen Dübel, bestehend aus einem Spreizdübel und einem in diesen einführbaren Isolierplattennagel. Der Spreizdübel kann Halterungsmittel, beispielweise vorstehendene Erhebungen, zur Halterung des Nagels aufweisen.

DE 33 18 800 A1 beschreibt ein System mit einem Kunststoff-Hülsendübel, einer Dübelnagelschraube, und einer Kunststoffhülse. Die Kunststoffhülse ist in einer zu befestigenden Bauteile zwischen dem Hülsendübel und der Dübelnagelschraube gelagert, weist einen Kopfteil auf, und schließt das Schaftteil und den Kopf der Dübelnagelschraube ein. Diese Hülse ermöglicht einen korrosionsicheren Einbau zugleich eine sichere Halterung des Bauteils.

Zunächst wird auf die bekannten Lösungen Bezug genommen. Dabei werden in den Zeichnungen folgende Bezugszeichen für die einzelnen Bauteile verwendet:
- 10: Dübel
- 11: Vorstehender Begrenzungsring
- 12: Gewinde
- 13: Verformbarer Körper
- 14: Rille
- 15: Ringförmige Grifffläche
- 17: Sperrelement
- 20: Schraube
- 21: Schraubgewinde
- 30: Bohrspitze
- 31: Einführungsloch

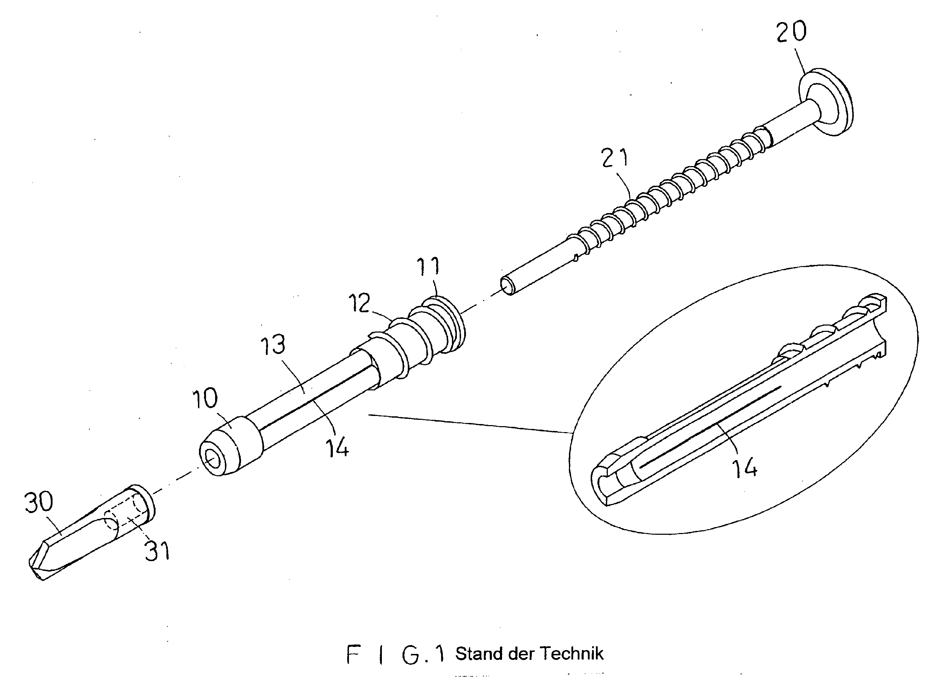

Ein Beispiel traditioneller Ausführungsformen der Einweg-Schraubkombination ist Abbildung 1 zu entnehmen, die eine dreidimensionale Ansicht eines bekannten Ausführungsmodells zeigt. Diese Ausführungsformbesteht vor allem aus einem Dübel 10, einer Schraube 20 und einer Bohrspitze 30.

Der Hauptkörper des Dübels 10 besteht aus Kunststoff (Nylon), geformt zu einem innen hohlen, stabförmigen Körper, welcher die Schraube 20 aufnehmen kann. Der innere Durchmesser des Dübels 10 ist an seiner Spitze kleiner als der äußere Umfang des Schraubgewindes 21 an der Schraube 20. Am unteren Ende des Dübels 10 befindet sich ein vorstehender Begrenzungsring 11. Außen am stabförmigen Körper des Dübels 10 befinden sich ein Gewinde 12 und ein verformbarer Körper 13. Am verformbaren Körper 13 des Dübels 10 befinden sich einige Rillen Aufsatzfläche für Drehwerkzeuge 22, in welche das elektronische Drehwerkzeug 1 zum drehen eingeführt werden kann.

Die Bohrspitze 30 besteht aus Metall (mittlerer Kohlenstoffstahl), in ihrem Zentrum befindet sich ein Einführungsloch 31, über welches die Bohrspitze 30 mit der Schraube 20 verbunden wird.

Bei der bekannten Ausführungsform einer Einweg-Schraubkombination zeigen sich in der tatsächlichen Anwendung zumindest die beiden unten genauer erläuterten Fehler oder Schwachstellen, die überwunden werden müssen:

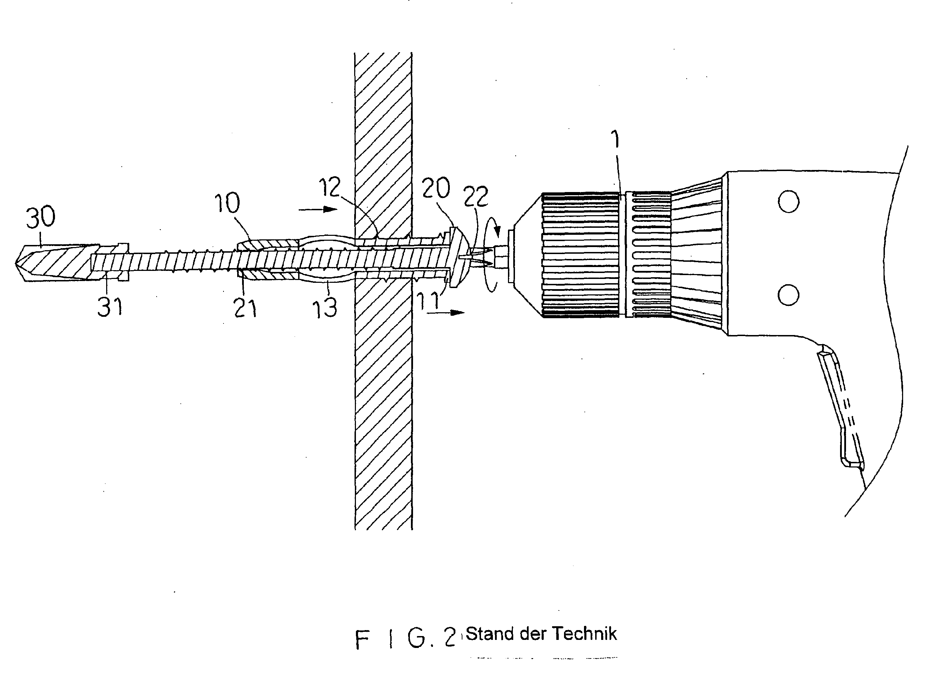

Erstens, da der Dübel 10 aus Kunststoff (Nylon) hergestellt ist, kann er leicht durch äußere Umwelteinflüsse wie etwa hohe Luftfeuchtigkeit beeinflusst werden, was etwa dazu führen kann, dass sich das obere Ende des Dübels 10 unter feuchten Bedingungen ausdehnt und unter trockenen Bedingungen zusammenzieht. Wie auf Abbildung 2 zu erkennen kann in ausgedehntem Zustand die Schraube 20 nicht effektiv im Dübel 10 greifen und somit den Dreheffekt nicht mit auf den Dübel 10 übertragen, so dass dieser verfrüht festgezogen wird. Im zusammengezogenen Zustand wird die Kraft, mit der die Schraube 20 im verformbaren Körper 13 des Dübels 10 festgezogen wird größer sein als die Kraft, mit der das Gewinde 12 den Dübel 10 sichert, so dass das Schraubgewinde 21 im Dübel 10 nicht greifen und durchdrehen wird.

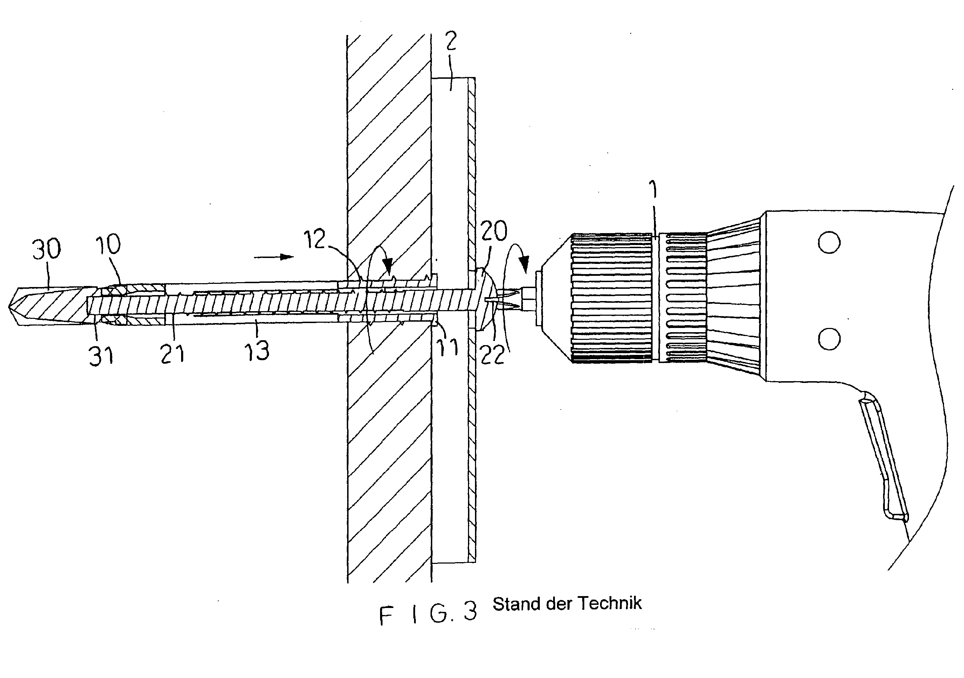

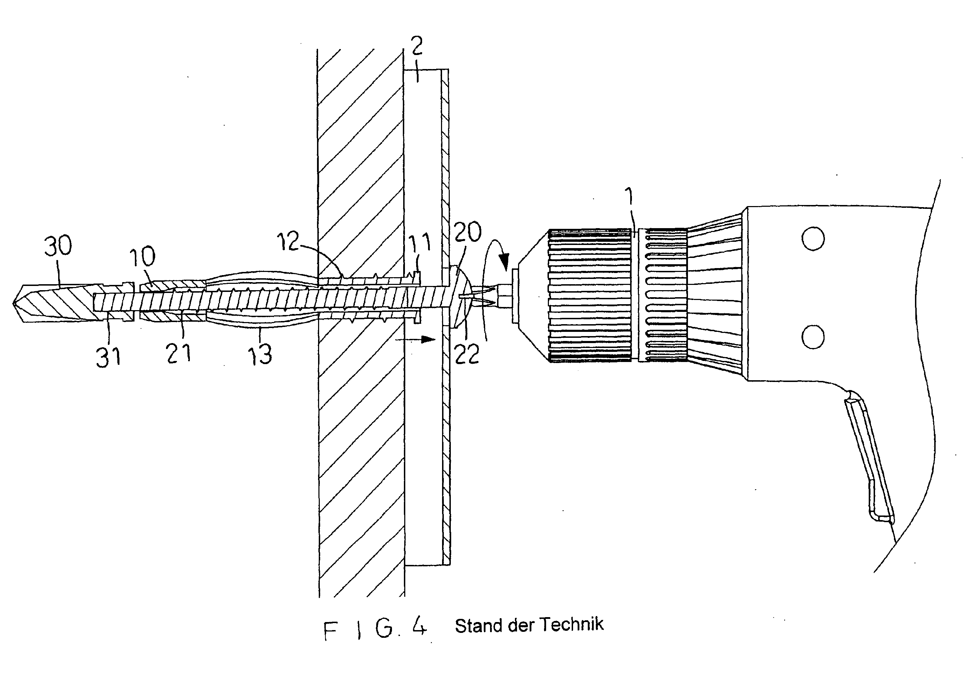

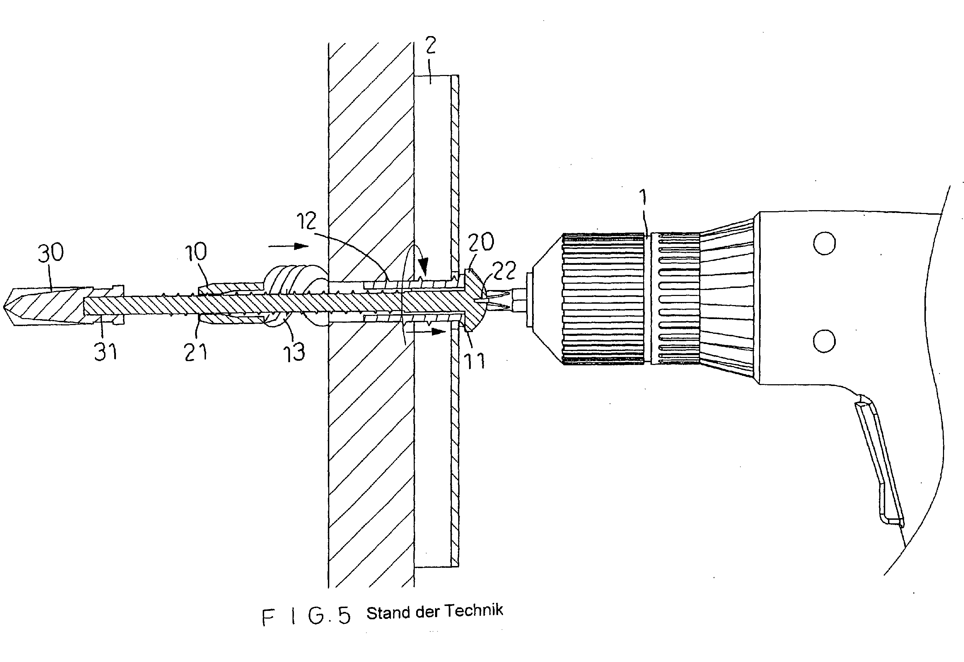

Zweitens, wie aus den Abbildungen 3, 4 und 5 ersichtlich, wird bei der bekannten Ausführungsform einer Einweg-Schraubkombination während der Sicherung eines Körpers 2 die Schraube 20 in dem Dübel 10 keinen sperrenden Effekt erzielen, so dass sich das Gewinde 12 des Dübels 10 im gleichen Augenblick wieder löst, in dem Zug auf den verformbaren Körper 13 ausgeübt wird, wodurch es unmöglich gemacht wird, den Körper 2 effektiv und fest zu sichern.

Mit der vorliegenden Erfindung wird das Problem der Griffkraft der Schraube im Dübel gelöst, die dazu verwendeten Technologien und deren Effekt im Gegensatz zu den bekannten Technologien sind wie folgt: Die Spitze des Dübels braucht an ihrem inneren Durchmesser nicht länger mit dem Schraubgewinde der Schraube ineinander zu greifen. Um den inneren Durchmesser, welcher kleiner als das Schraubgewinde ist, zu perfektionieren wurde im inneren Durchmesser der Spitze des Dübels ein Gewinde angebracht, wobei dieses Gewinde aus einer Ringform oder einer vorstehenden Form mehrerer Rillen bestehen kann. So kann die Konstruktion auch in feuchter Umgebung genutzt werden, wenn der innere Durchmesser erweitert ist. Da die Ringform oder vorstehende Form mehrerer Rillen mit dem Schraubgewinde der Schraube ineinander greift werden sich, auch wenn sich der innere Durchmesser unter trockenen Bedingungen zusammenzieht, die Ringform oder vorstehende Form mehrerer Rillen zusammenziehen und somit die Zugkraft des Schraubgewindes der Schraube noch verstärken, wodurch das Gewinde des Dübels fest gesichert werden kann, womit das erste Ziel erreicht wird.

Die vorliegende Erfindung löst das Problem der sicheren Befestigung von Werkstücken, die dazu verwendeten Technologien und deren Effekt im Gegensatz zu den bekannten Technologien sind wie folgt: Entsprechend den tatsächlichen Löchern der Werkstücke sind zwischen dem Dübel und dem Schraubenkopf Sperrelemente angebracht. Wenn nun die Schraube das Werkstück festzieht, wird durch diese Sperrelemente ein passender Sperreffekt auf den Dübel ausgewirkt, wodurch das Gewinde des Dübels vollständig festgezogen werden kann, während der verformbare Körper beginnt, sich unter der Zugkraft zu verformen. Somit wird das Werkstück fest gesichert, womit auch das zweite Ziel erreicht wird.

Im Folgenden werden unter Bezug auf die beigefügte Zeichnung die erfindungsgemäßen Ausführungsformen im Detail beschrieben. In der Zeichnung zeigt:
Abb. 1 zeigt eine dreidimensionale Detailansicht einer bekannten Aus führungs form,
Abb. 2 zeigt eine Ansicht einer bekannten Ausführungsform mit zusammengezogenem oberen Ende des Dübels,
Abb. 3 zeigt die erste Ansicht einer bekannten Ausführungsform während des Befestigungsvorgangs eines Werkstücks,
Abb. 4 zeigt die zweite Ansicht einer bekannten Ausführungsform während des Befestigungsvorgangs eines Werkstücks,
Abb. 5 zeigt die dritte Ansicht einer bekannten Ausführungsform während des Befestigungsvorgangs eines Werkstücks,
Abb. 6 zeigt eine dreidimensionale Detailansicht eines ersten Ausführungsbeispiels der vorliegenden Erfindung,
Abb. 7 zeigt eine dreidimensionale Detailansicht eines zweiten Ausführungsbeispiels der vorliegenden Erfindung,
Abb. 8 zeigt eine dreidimensionale Detailansicht eines dritten Ausführungsbeispiels der vorliegenden Erfindung,
Abb. 9 zeigt eine Ansicht des dritten Ausführungsbeispiels der vorliegenden Erfindung in Verwendung,
Abb. 10 zeigt eine Ansicht eines Ausführungsbeispiels der vorliegenden Erfindung während des Einschraubvorgangs,

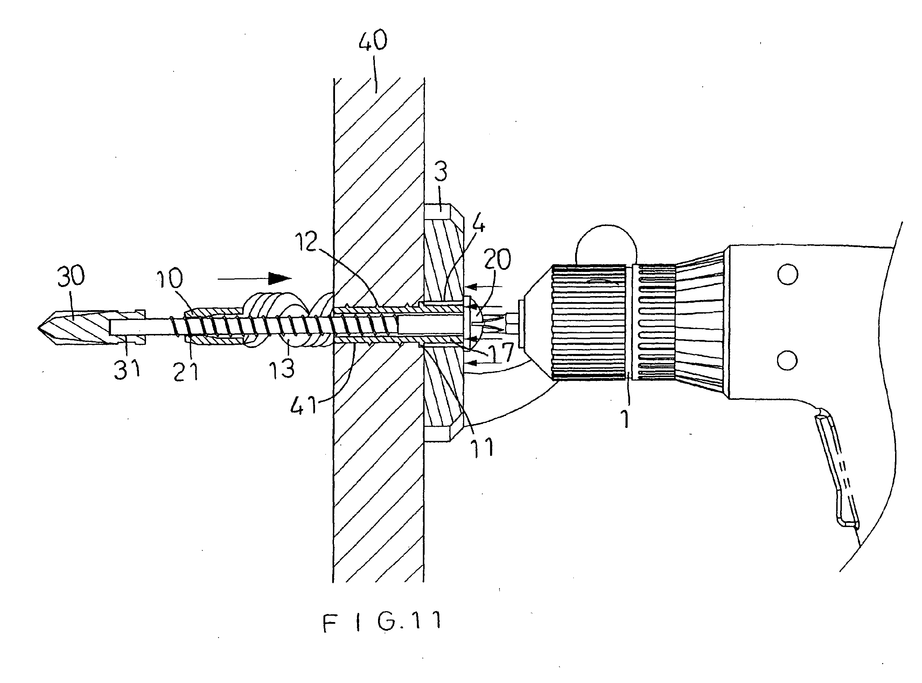

Abb. 11 zeigt eine Ansicht eines Ausführungsbeispiels der vorliegenden Erfindung während des Eindrehvorgangs,
Abb. 12 zeigt eine Ansicht eines Ausführungsbeispiels der vorliegenden Erfindung mit sich ausdehnendem verformbaren Körper,
Abb. 13 zeigt eine Ansicht eines Ausführungsbeispiels der vorliegenden Erfindung mit komplett ausgedehntem verformbaren Körper und

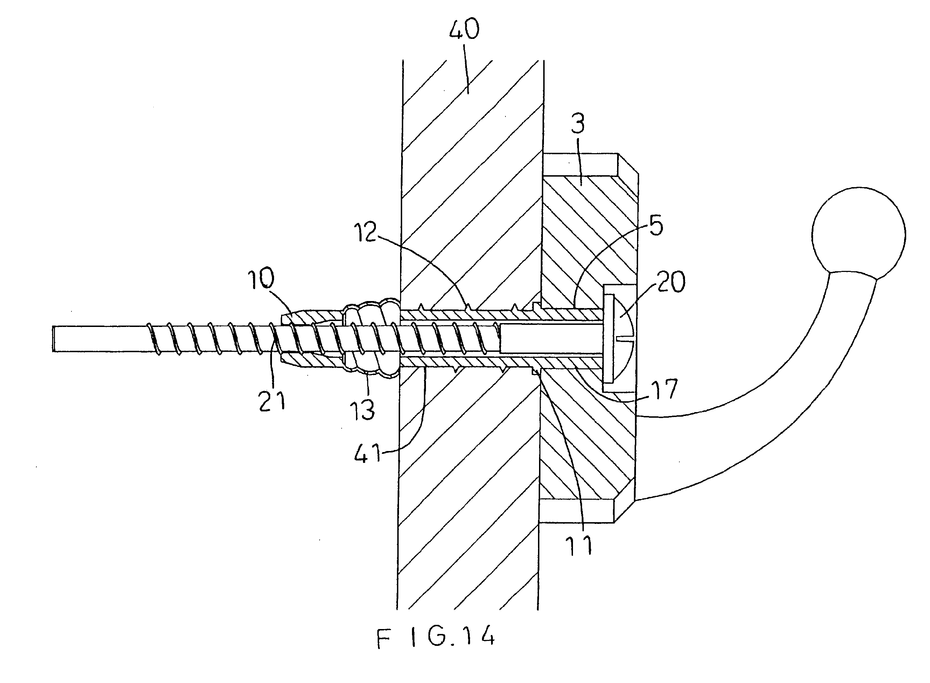

Abb. 14 zeigt eine weitere Ansicht des Ausführungsbeispiels der vorliegenden Erfindung in Verwendung.

Für den Aufbau der Einweg-Schraubkombinationen wird insbesondere auf die Abbildungen 6, 7 und 8 verwiesen, diese stellen dreidimensionale Detailansichten dreier Ausführungsformen dar. Aufbau und Ausführungsform dieser drei Versionen einer Einweg-Schraubkombinationen gleichen sich weitgehend, sie umfassen einen Dübel 10, eine Schraube 20 und eine Bohrspitze 30. Auf die im Aufbau gleichen Bestandteile und deren Bezeichnungen wird nicht noch einmal näher im Detail eingegangen werden. Die für die vorliegende Erfindung und Patentanmeldung bedeutenden Punkte sind folgende:

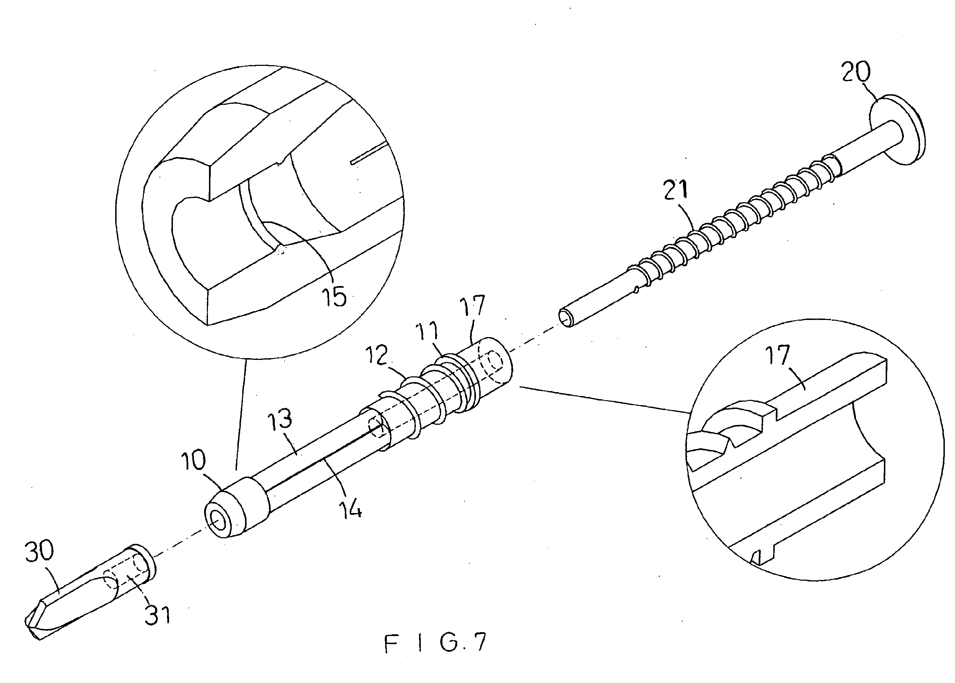

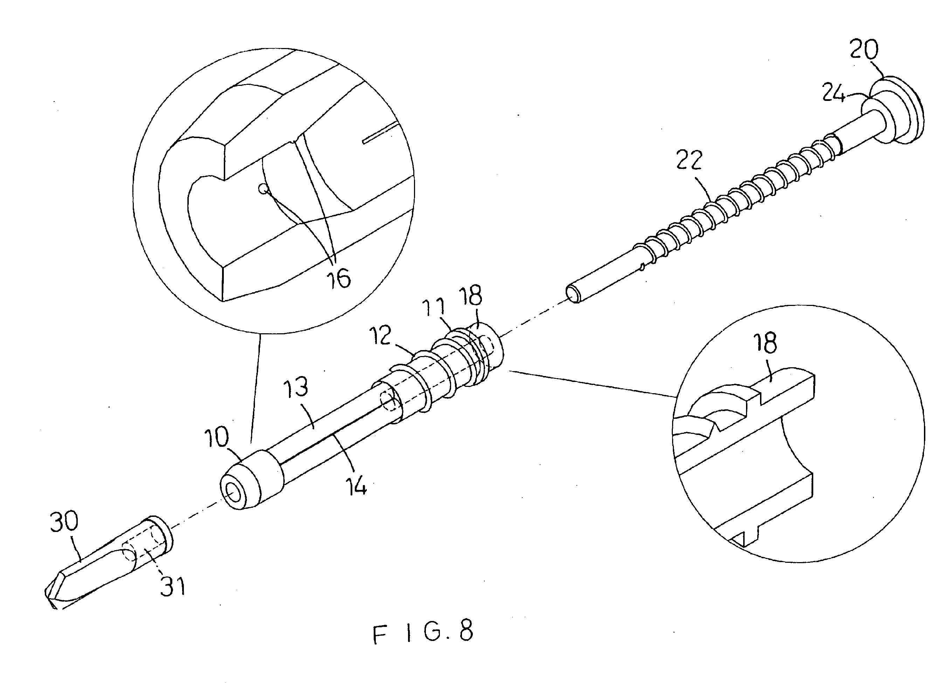

Die Besonderheit der vorliegenden Erfindung besteht darin, dass der innere Durchmesser an der Spitze des Dübels 10 über eine ringförmige Grifffläche 15 (wie in Ausführungsbeispiel 1 auf Abbildung 7 zu erkennen) oder über eine vorstehende Form mehrerer Noppen 16 (wie in den Ausführungsbeispielen 2 und 3 auf Abbildung 6 und 8 zu erkennen) verfügt.

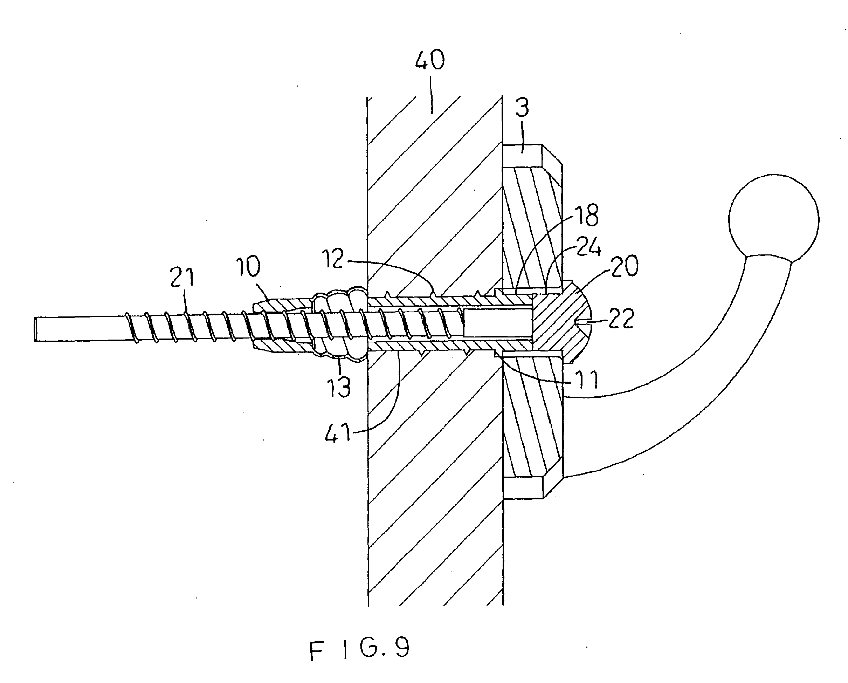

Die zweite Besonderheit der vorliegenden Erfindung besteht darin, dass der Dübel 10 am oberen Ende über ein Sperrelement 17 verfügt (siehe Ausführungsbeispiel 1 auf Abbildung 7), welches in seiner Länge der Tiefe des tatsächlichen Lochs 4 im Werkstück 3 entspricht, oder sich alternativ an der Schraube 20 ein Sperrelement 23 befindet, welches in seiner Länge der Tiefe des tatsächlichen Lochs 4 im Werkstück 3 entspricht (siehe Ausführungsbeispiel 2 auf Abbildung 7), oder sich sowohl am Dübel 10 als auch an der Schraube 20 jeweils ein Sperrelement 18, 24 befindet, von denen jedes in seiner Länge genau der Hälfte der Tiefe des tatsächlichen Lochs 4 im Werkstück 3 entspricht (siehe Ausführungsbeispiel 3 auf Abbildung 8 und 9).

Dies kombiniert mit den zuvor beschriebenen Bestandteilen der vorangehenden Technologien bietet eine Einweg-Schraubkombination, in der tatsächlichen Verwendung wie folgt:

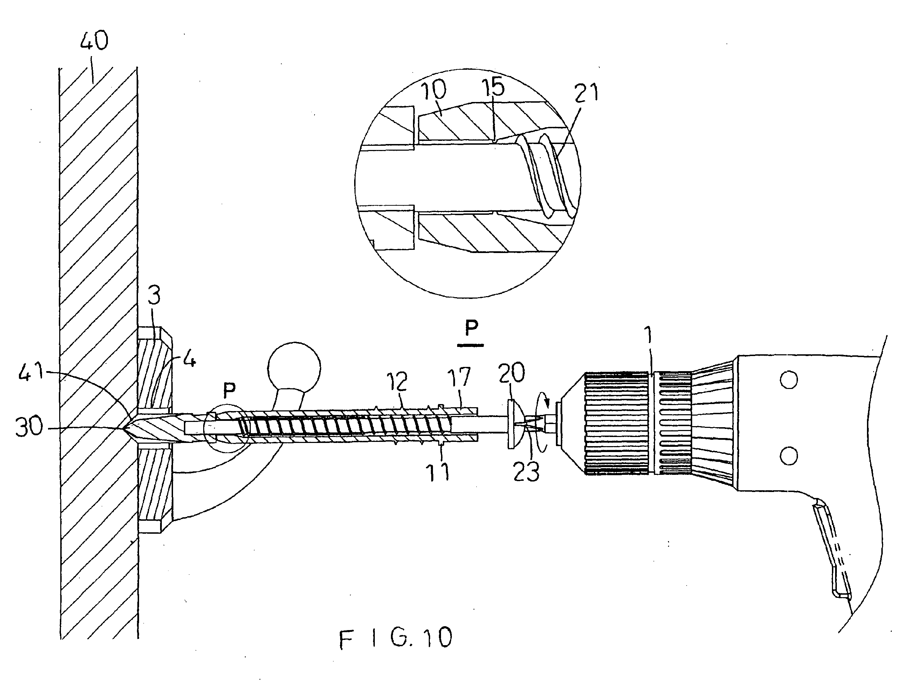

Abbildung 10 stellt eine Detailansicht der vorliegenden Erfindung während des Einschraubvorgangs dar. Dabei wird das Gewinde 12 des Dübels 10 in das Loch 4 eingeführt, wenn der vorstehende Begrenzungsring 11 am Dübel 10 auf das Loch 41 trifft kann der Dübel 10 nicht tiefer eingedreht werden, wobei gleichzeitig das Sperrelement 17 des Dübels 10 genau mit der Schraube 20 abschließt und somit verhindert, dass der Dübel 10 sich lockert oder zurückbewegt,

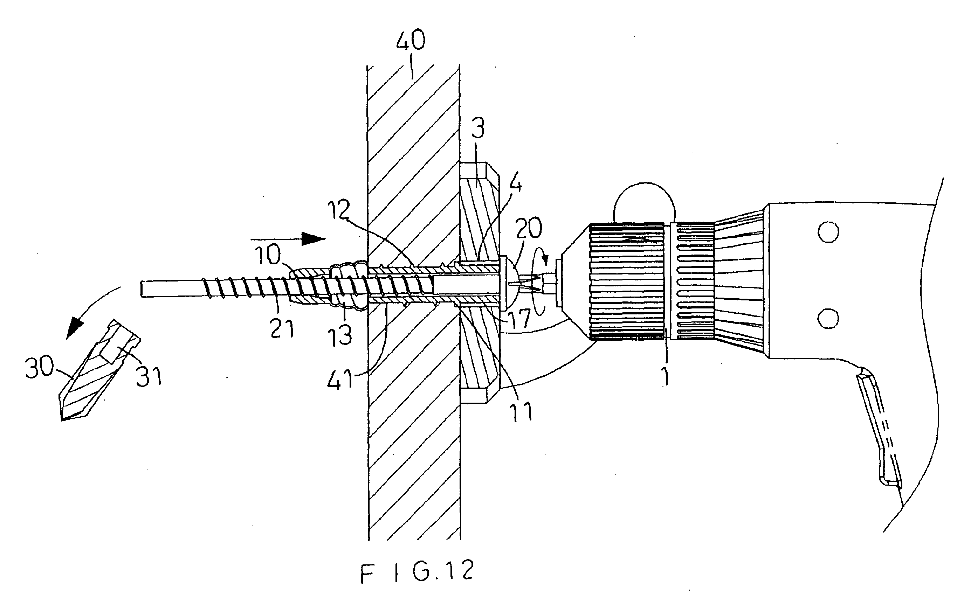

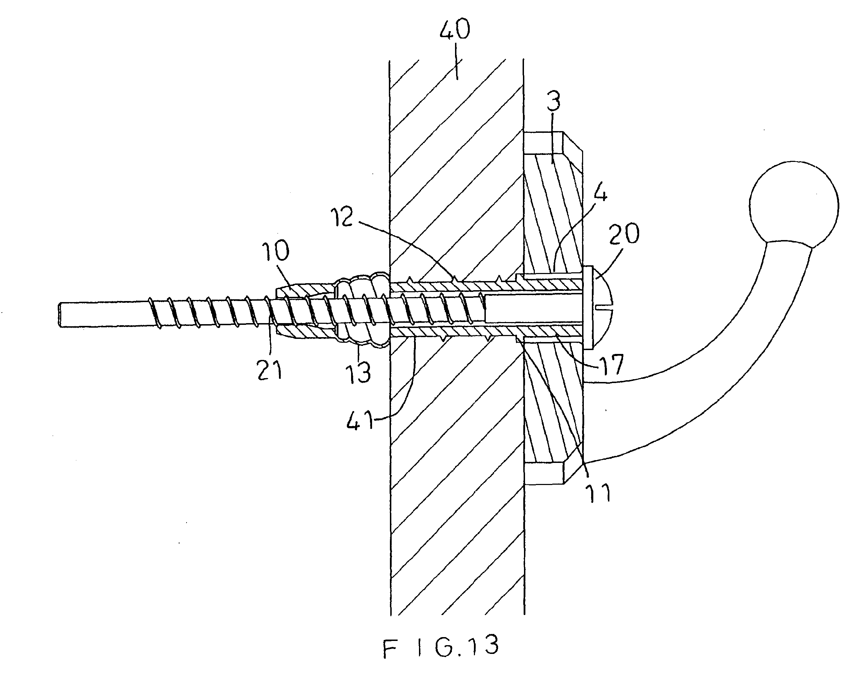

In den Abbildungen 12 und 13 sind sich ausdehnende verformbare Körper und vollständig ausgedehnte verformbare Körper dargestellt. Wenn der Dübel 10 gesichert ist und sich nicht weiter bewegen kann, wird das Schraubgewinde 21 an der Schraube 20 weiterhin in die ringförmige Grifffläche 15 am inneren Durchmesser an der oberen Spitze des Dübels 10 greifen und weiter an dieser schrauben, wodurch der verformbare Körper 13 des Dübels 10 durch die Zugkraft, die von der Schraube 20 auf ihn ausgeübt wird, sich zu seinem ausgedehnten Zustand verformt. Dabei werden die Rillen 14 ausgedehnt und erweitert, womit das Werkstück 3 fest auf der Platte oder Wand 40 gesichert wird.

Bestandteile der Ausführungsmodelle der bekannten Ausführungsform
1 elektronisches Drehwerkzeug
2 zu befestigendes Werkstück
10 Dübel
11 vorstehender Begrenzungsring
12 Gewinde
13 verformbarer Körper
14 Rille
20 Schraube
21 Schraubgewinde
22 Aufsatzfläche für Drehwerkzeuge
30 Bohrspitze
31 Einführungsloch

Bestandteile der erfindungsgemäßen Ausführungsformen
3 Werkstück
4 Loch
5 Fischaugenloch
15 ringförmige Grifffläche
16 vorstehende Form mehrerer Rillen
17 Sperrelement
18 Sperrelement mit halber Tiefe
23 Sperrelement
24 Sperrelement mit halber Tiefe
40 Platte oder Wand
41 Loch

## Patentansprüche

1. Einweg-Schraubkombination, bestehend aus einem Dübel (10), einer Schraube (20) und einer Bohrspitze (30),
wobei der Dübel (10) aus Kunststoff besteht, geformt zu einem innen hohlen, stabförmigen Körper, welcher die Schraube (20) aufnehmen kann, wobei der innere Durchmesser des Dübels (10) an seiner Spitze kleiner als das Schraubgewinde (21) ist, während der Dübel (10) am unteren Ende mit einem vorstehenden Begrenzungsring (11) ausgestattet ist und sich außen am stabförmigen Körper des Dübels ein Gewinde (12) und ein verformbarer Körper (13) befinden,
wobei sich am verformbaren Körper (13) des Dübels (10) einige Rillen (14) befinden, welche helfen die Eigenschaft der Verformbarkeit zu erzielen,
während die Schraube (20) aus Metall besteht und über die Spitze eine Bohrspitze (30) gestülpt hat, sich am mittleren Teil der Schraube (20) ein Schraubgewinde (21) befindet, welches im Inneren des Kopfes des Dübels (10) greift und sich am unteren Ende der Schraube (20) die Aufsatzfläche für Drehwerkzeuge (22) befindet, in welche das elektronische Drehwerkzeug (1) zum drehen ein geführt werden kann,
während die Bohrspitze (30) aus Metall besteht, mit einem Einführungsloch (31) in ihrem Zentrum, über welches die Bohrspitze (30) mit der Spitze der Schraube verbunden wird,
**dadurch gekennzeichnet, dass** an den Flächen zwischen dem vorstehenden Begrenzungsring (11) und der Schraube (20) ein Sperrelement (17, 18, 23, 24) angebracht ist, welches in seiner Länge der Tiefe des tatsächlichen Lochs (4, 41) im Werkstück (3) entspricht.

2. Einweg-Schraubkombination gemäß Anspruch 1, **dadurch gekennzeichnet, dass** das Sperrelement (17) am vorstehenden Begrenzungsring (11) angebracht ist.

3. Einweg-Schraubkombination gemäß Anspruch 1, **dadurch gekennzeichnet, dass** das Sperrelement (23) an der der Schraube (20) entsprechenden Seite angebracht ist.

4. Einweg-Schraubkombination gemäß Anspruch 1, **dadurch gekennzeichnet, dass** ein Sperrelement (18) am vorstehenden Begrenzungsring (11) angebracht ist und ein weiteres Sperrelement (24) an der der Schraube (20) entsprechenden Seite angebracht ist.

5. Einweg-Schraubkombination gemäß Anspruch 1, **dadurch gekennzeichnet, dass** das Loch (4, 41) im Werkstück (3) die Form eines Fischaugenlochs (5) hat.

6. Einweg-Schraubkombination gemäß Anspruch 1, **dadurch gekennzeichnet, dass** im inneren Durchmesser an der Spitze des Dübels (10) eine Grifffläche (15) angebracht ist, welche mit dem Schraubgewinde (21) der Schraube (20) ineinander greift.

7. Einweg-Schraubkombination gemäß Anspruch 6, **dadurch gekennzeichnet, dass** die Grifffläche (15) ringförmig ist.

8. Einweg-Schraubkombination gemäß Anspruch 6, **dadurch gekennzeichnet, dass** die Grifffläche (15) aus einer vorstehenden Form mehrerer Rillen (16) besteht.

## Claims

1. One-way screw fastener comprising an anchor sleeve (10), a screw (20) and a drilling point (30); wherein, the anchor sleeve (10) is made of plastic and formed with a hollow rod-shaped body therein for receiving the screw (20); wherein, an inner diameter of the anchor sleeve (10) at a point thereof is smaller than that of the screw thread (21); the anchor sleeve (10) further forms a protrudent limiting ring (11) at a lower end thereof; a threaded section (12) is formed out of the rod-shaped body of the anchor sleeve; and a deformable portion (13) is defined
wherein, a plurality of grooves (14) are formed on the deformable body (13) of the anchor sleeve (10) for achieving a preferable deformable effect;
wherein, the screw (20) is made of metal and sleeved by a drilling point (30); a screw thread (21) is disposed on a middle part of the screw (20); wherein, the inner of a head of the anchor sleeve (10) could seize a lower end of the screw (20) so as to engage with an ornamental plane via a drilling tool (22), so that a power drill (1) is able to be applied for screwing;
wherein, the drilling point (30) is made of metal; wherein, the drilling point (30) includes a guiding hole (31) formed at its center for connecting the drilling point (30) with the point of the screw;
**characterized in that**, a blocking member (17, 18, 23, 24) is disposed between the protrudent limiting ring (11) and the screw (20); wherein, the length of the blocking member is defined in accordance with the total depth of holes (4, 41) in the work piece (3).

2. One-way screw fastener as claimed in claim 1, wherein, the blocking member (17) is formed on the protrudent limiting ring (11).

3. One-way screw fastener as claimed in claim 1, wherein, the blocking member (23) is correspondingly formed at one side of the screw (20).

4. One-way screw fastener as claimed in claim 1, wherein, the blocking member (18) is formed on the protrudent limiting ring (11) and the blocking member (24) is correspondingly formed at one side of the screw (20).

5. One-way screw fastener as claimed in claim 1, wherein, the holes (4, 41) defined in the work piece (3) adopt a fish-eye hole (5).

6. One-way screw fastener as claimed in claim 1, wherein, the inner diameter of the point of the anchor sleeve (10) is provided with a holding plane (15) for seizing the screw thread (21) of the screw (20).

7. One-way screw fastener as claimed in claim 6, wherein, the holding plane (15) is formed annular.

8. One-way screw fastener as claimed in claim 6, wherein, the holding plane (15) is formed by a plurality of swelling grooves (16).

## Revendications

1. Ensemble vis à sens unique comprenant une cheville (10), une vis (20) et un point de forage (30) ; dans lequel
la cheville (10) est faite de matière plastique et prend la forme d'un corps en forme de tige à l'intérieur creux (13) destiné à recevoir la vis (20) ; le diamètre interne de la cheville (10), à sa pointe, est plus petit que la tige filetée (21), tandis que la cheville (10) est munie, à son extrémité inférieure, d'une bague limitante faisant saillie (11), et un filetage (12) et un corps déformable (13) se trouvent à l'extérieur du corps en forme de tige de la cheville (10) ;
sur le corps déformable (13) de la cheville (10) se trouvent une pluralité de rainures (14), permettant d'obtenir l'aptitude à la déformation ;
la vis (20) est faite de métal ; la vis (20) comprend un point de forage (30) placé à sa pointe, et une tige filetée (21) disposée sur sa section centrale, laquelle tige filetée (21) entre en prise à l'intérieur de la tête de la cheville (10) ; une surface d'appui pour un outil rotatif se trouve à l'extrémité inférieure de la vis (20), dans laquelle l'outil rotatif électronique (1) destiné à tourner peut être introduit;
le point de forage (30) est fait de métal et comprend un trou de guidage (31) formé en son centre pour connecter le point de forage (30) avec la pointe de la vis ;
**caractérisé par le fait qu'**un élément de blocage (17, 18, 23, 24) est disposé sur la surface entre la bague limitante (11) faisant saillie et la vis (20) ; la longueur de l'élément de blocage correspondant à la profondeur des trous (4, 41) dans la pièce à travailler (3).

2. Ensemble vis à sens unique selon la revendication 1, **caractérisé par le fait que** l'élément de blocage (17) est monté sur la bague limitante (11) faisant saillie.

3. Ensemble vis à sens unique selon la revendication 1, **caractérisé par le fait que** l'élément de blocage (23) est monté sur le côté correspondant de la vis (20).

4. Ensemble vis à sens unique selon la revendication 1, **caractérisé par le fait qu'**un élément de blocage (18) est monté sur la bague limitante (11) faisant saillie et qu'un autre élément de blocage (24) est monté sur le côté correspondant de la vis.

5. Ensemble vis à sens unique selon la revendication 1, **caractérisé par le fait que** le trou (4, 41) défini dans la pièce à travailler (3) adopte une forme de trou en oeil de poisson (5).

6. Ensemble vis à sens unique selon la revendication 1, **caractérisé par le fait qu'**une surface d'engagement (15) est formée dans le diamètre interne à la pointe de la cheville (10), laquelle entre en prise avec la tige filetée (21) de la vis (20).

7. Ensemble vis à sens unique selon la revendication 6, **caractérisé par le fait que** la surface d'engagement (15) est en forme d'anneau.

8. Ensemble vis à sens unique selon la revendication 6, **caractérisé par le fait que** la surface d'engagement (15) est formé en projection, par plusieurs rainures (16).
